# EUROPEAN PATENT APPLICATION

(11) **EP 1 482 410 A2**
(43) Date of publication of application: **01.12.2004**
(21) Application number: 04253098.0
(22) Date of filing: 26.05.2004
(51) Int. Cl.: G06F 9/445

(54) **Software update processor, system, method, and program**

(30) Priority: 27.05.2003 JP 2003149425
(71) Applicant: Pioneer Corporation, Tokyo 153-8654 (JP)
(72) Inventor: Hashimoto, Shinya, Tokorozawa-shi Saitama 359-8522 (JP); Sugihara, Motooki, Tokorozawa-shi Saitama 359-8522 (JP)
(74) Representative: Haley, Stephen

(57) **Abstract**

When new software is stored in a server device (400), the software is stored in a preset free area (441B), and time information on time and date when the software is stored in association with information on the update file name in the free area (441B) to provide a new free area (441B). When a terminal unit (300) starts up, information on updating date fetched from the server device (400) when the software has been stored in advance, as well as information on update file names concerning software to be updated next is provided in information on update demand using If-Modified-Since of the HTTP to make the information transmitted to the server device (400). The server device (400) transmits the software to be stored in an update data area (441A) in the information on update file names having the time information more recent than the information on update data as software to be updated to the terminal unit (300).

## Description

The present invention relates to a software update processor used for updating software, a system, a method, a program for the same, and a recording medium with the program recorded therein.

There have been known various methods for updating OS (Operating System) software for a persona computer or application software or the like developed on the operating system. The methods for updating software are roughly classified into two types. The first type of methods for updating software are the ones in which information concerning a version of software having been installed, for instance, in a terminal unit is checked, and software required for updating is identified based on the information concerning the latest version of the software in a server device for supplying the software. The technology as described above is disclosed, for instance, in Prior Art 1 (Japanese Patent Laid-Open Publication No. 2002-271849, page 3, right column to page 5, right column), Prior Art 2 (Japanese Patent Laid-Open Publication No. HEI 11-316684, page 5, right column to page 8, right column), and Prior Art 3 (Japanese Patent Laid-Open Publication No. 2001-297005, page 3, right column to page 4, right column). The second type of methods for updating software are the ones in which information concerning a version of software is transmitted from a terminal unit to a server device, and the server device recognizes the software to be updated based on the version information for the software in the terminal unit and transmits the software according to the necessity. The technology as described above is disclosed, for instance, in Prior Art 4 (Japanese Patent Laid-Open No. HEI 10-105406, page 3, right column to page. 6, left column), and Prior Art 5 (Japanese Patent Laid-Open Publication No. 2002-366469, page 5, right column to page 8, left column).

In the method described in Prior Art 1, information concerning a version of software stored in a terminal unit is transmitted via a network to a server device. Then, the server device compares the version information transmitted from the terminal unit to version information for a module to be updated under management by the server device, and transmits guidance for updating to the terminal unit. The terminal unit fetches the latest version information based on the guidance for updating and updates the software.

In the method described in Prior Art 2, when a server recognizes that a prespecified period of time has passed, the server determines whether or not updating is required based on the information of software previously transmitted and registered in a terminal unit, and transmits object software to the terminal unit together with an instruction for updating. The terminal unit executes updating based on the instruction for updating.

In the method described in Prior Art 3, a date when software is updated is stored in a terminal unit, and the last updating date for the software is stored in a server device. Then, the terminal unit fetches information concerning an updating date from the server device, compares the date to that stored in the terminal unit, and updates the software when the updating date in the server device is more recent than that stored in the terminal unit.

In the method described in Prior Art 4, information for instructing an updating work stored in a server device and including information concerning software to be updated is transmitted to a terminal unit. Then the terminal unit updates the software based on the updating work instruction information fetched from the server device.

Further in the method described in Prior Art 5, a server device fetches from a terminal unit information concerning a version of software stored in the terminal unit, searches for the optimal update data for optimizing the software installed in the terminal unit, and transmits the data to the requiring terminal unit. The terminal unit fetches the optimal update data transmitted thereto, and updates the software.

However, in the method as described in Prior Art 1, Prior Art 2, and Prior Art 3 in which a server device searches for software to be updated based on information stored in a terminal unit, and a terminal unit having fetched the information concerning a result of search updates the software according to the necessity, a workload to the server device increases in association with increase of accesses, and software to be updated in the terminal unit can not be transmitted efficiently, which is one of the problems occurring in this type of method. Further in the method as described in Prior Art 4 and Prior Art 5 in which a terminal unit searches for software to be updated based on the information transmitted from a server device, an additional workload is added to the terminal unit, and the terminal unit is required to have the processing capability for responding to the additional workload. This makes it difficult to simplify configuration of a terminal unit, which is one of the problems occurring in this type. Further, the terminal unit must execute transaction of information several times with the server device until the software is updated, and it is necessary to reduce the additional workload required for information transaction.

A main object of the present invention is to provide, in view of the problem described above, a software update processor capable of efficiently updating software, a system, a method, a program for the same, and a recording medium with the program recorded therein.

A first software update processor according to the present invention is a device for transmitting software to be updated via a network, and the device comprises a storage section for storing the software therein together with specific information identifying the software and time information concerning the date and time when the software is stored therein; a demand acquirement section for acquiring a demand signal for the software to be updated via the network; and a detection section for determining whether or not the information on updating data in the specific information identifying the software to be updated including the demand signal is more recent than the time information in the specific information stored in the storage section and also for detecting and transmitting the software corresponding to the specific information indicating a more recent date of the time information as the software to be updated.

A second software update processing according to the present invention is a device for transmitting software to be updated via a network, and the device comprises a storage section for storing the software therein together with specific information identifying the software and time information concerning the date and time when the software is stored therein; a demand acquirement section for acquiring a demand signal for demanding the software to be updated via the network; and a detection section for determining whether or not the information on updating data in the specific information identifying the software to be updated including the remand signal is more recent than the time information in the specific information stored in the storage section, and for transmitting, when specific information indicating a more recent time information, the detected specific information so that the information can be displayed in a tabular form.

A third software update processor according to the present invention is a device for receiving software to be updated via a network, and the device comprises a storage section for storing therein the software; a software demand section for generating a demand signal having time information concerning time and date when the software is updated as well as specific information identifying the software to be updated next and demanding the software to be updated next, and for transmitting the demand signal; and a software update section for executing the processing for updating by fetching the software to be updated transmitted by the transmission of the demand signal and by making the storage section store therein the software to be updated in operable state.

A fourth software update processor according to the present invention is a device for receiving software is to be updated via a network, and the device comprises a storage section for storing therein the software; a software demand section for generating a demand signal having time information concerning time and date when the software is updated as well as specific information identifying the software to be updated next and demanding the software to be updated next, and for transmitting the demand signal; and a software update section for fetching specific information on said software to be updated transmitted by the transmission of said demand signal so that the information can be displayed in a tabular form.

A software update processing system according to the present invention comprises the third or fourth software update processor according to the present invention described above, and the first or second software update processor according to the present invention described above for detecting the software to be updated in response to a demand signal transmitted via the network from the third or fourth software update processor in the transmittable state.

The software update processing system according to the present invention is a system for making a terminal unit fetch software to be updated via a network from a server device and having the software updated according to the necessity, and the server device comprises a server storage section for storing therein the software together with specific information identifying the software and time information concerning the date and time when the software is stored; a demand fetch section for fetching a demand signal for demanding software to be updated transmitted from the terminal unit via the network; and a detection section for determining whether or not updating date information in the specific information identifying software to be updated included in the demand signal is more recent than the time information in the specific information stored in the server storage section, detecting the software corresponding to the specific information including the more recent time information as the software to be updated, and having the detected software transmitted to the terminal unit.

The software update processing system according to the present invention is a system for making a terminal unit fetch software to be updated via a network from a server device and having the software updated according to the necessity, and the server device comprises a server storage section for storing therein the software together with specific information identifying the software and time information concerning the date and time when the software is stored; a demand fetch section for fetching a demand signal for demanding software to be updated transmitted from the terminal unit via the network; and a detection section for determining whether or not updating date information in the specific information identifying software to be updated included in the demand signal is more recent than the time information in the specific information stored in the server storage section, and transmitting, when specific information including more recent time information is detected, the detected specific information so that the specific information can be displayed in a tabular form on the terminal unit.

The software update processing system according to the present invention is a system for making a terminal unit fetch software to be updated via a network from a server device and having the software updated according to the necessity, and the terminal unit comprises a terminal storage section for storing the software; a software demand section for generating a demand signal having time information concerning the time and date when software is updated as well as specific information identifying the software to be updated next and demanding the software to be updated next, and making the demand signal transmitted via the network to the server device; and a software update section for updating software by fetching the software to be updated transmitted from the server device by the transmission of said demand signal, and by storing the software in the terminal storage section in operable state.

The software update processing system according to the present invention is a software update processing system for making a terminal unit fetch software to be updated via a network from a server device and having the software updated according to the necessity, and the terminal unit comprises a terminal storage device for storing therein the software; a software demand section for generating a demand signal having time information concerning the time and date when software is updated as well as specific information identifying the software to be updated next and demanding the software to be updated next, and making the demand signal transmitted via the network to the server device; and a software update section for fetching specific information on the software to be updated transmitted from the server device by the transmission of the demand signal so that the specific information can be displayed in a tabular form.

The software update processing method according to the present invention is a method for transmitting software to be updated via a network by a computing section, and the computing section determines, when a demand signal for demanding the software to be updated via the network is acquired, based on the updating date information included in the specific information identifying the software to be updated included in this demand signal, whether or not the time information concerning the date and time when the software is stored, which is stored in the storage section together with the software, is more recent, detects the specific information identifying the software stored in the storage section together with the time information corresponding to the more recent time information, and has the software corresponding to this specific information transmitted as the software to be updated.

The software update processing method according to the present invention is a method for transmitting software to be updated via a network by a computing section, and the computing section determines, when a demand for demanding the software to be updated via the network is acquired, based on the based on the updating date information included in the specific information identifying the software to be updated included in this demand signal, whether or not the time information concerning the date and time when the software is stored, which is stored in the storage section together with the software is more recent, detects the specific information identifying the software stored in the storage section together with the time information corresponding to the more recent time information, and has this specific information transmitted so that the specific information can be displayed in a tabular form. The software update processing method according to the present invention is a method for receiving software to be updated via a network by a computing section, the method comprises the steps of: generating a demand signal which has time information concerning the time and date when software is updated as well as specific information identifying software to be updated next and demands the software to be updated next, and making the generated demand signal transmitted; and fetching said software to be updated transmitted by the transmission of the demand signal to update the software in operable state.

The software update processing method according to the present invention is a method of receiving software to be updated via a network by a computing section, the method comprises the steps of: generating a demand signal which has time information concerning the time and date when software is updated as well as specific information identifying software to be updated next and demands the software to be updated next, and making the generated demand signal transmitted; and fetching the specific information on said software to be updated transmitted by the transmission of the demand signal so that the specific information can be displayed in a tabular form.

The software update processing method according to the present invention is a method for making a terminal unit fetch software to be updated via a network from a server device and having the software updated according to the necessity by a computing section, and the computing section makes the server device acquire a demand for demanding the software to be updated via the network from the terminal unit, determines, based on the updating date information in the specific information identifying software to be updated included in the demand signal with the server device, whether or not the time information concerning the time and date when the software is stored, which is stored in the storage section of the server device together with the software, is more recent, detects specific information identifying the software corresponding to the more recent time information and stored together with the time information in the storage section; transmits the software corresponding to the specific information and stored in the storage section as the software to be updated the terminal unit, and makes the terminal unit update the fetched software to be updated in operable state.

The software update processing method according to the present invention is a method for making a terminal unit fetch software to be updated via a network from a server device and having the software updated according to the necessity by a computing section, and the computing section makes the server device acquire a demand signal demanding the software to be updated from the terminal unit via the network; determines, based on the updating date information in the specific information identifying software to be updated included in the demand signal with the server device, whether or not the time information concerning the time and date when the software is stored, which is stored in the storage section of the server device together with the software, is more recent; detects specific information identifying the software corresponding to the more recent time information and stored together with the time information in the storage section; transmits the specific information to the terminal unit so that the specific information can be displayed in a tabular form; and selects at least one piece of the specific information on the terminal unit and displays the specific information in a tubular form so that the server device can demand the information.

A software update processing program according to the present invention makes a computing section execute any of the software update processing methods according to the present invention as described above.

A recording medium with the software update processing program recorded therein according to the present invention records therein the software update processing program according to the present invention as described above in the computer-readable state.

### In the Drawings;

Fig. 1 is a block diagram showing general configuration of a software update processing system according to one embodiment of the present invention;
Fig. 2 is a block diagram showing general configuration of a terminal unit in the embodiment above;
Fig. 3 is a block diagram showing general configuration of a server device in the embodiment above;
Fig. 4 is a schematic diagram showing tabular structure of a server storage section in the embodiment;
Fig. 5 is a flow chart showing processing operations for updating software executed in the terminal unit in the embodiment above; and
Fig. 6 is a flow chart showing processing operations for updating software in the server device in the embodiment.

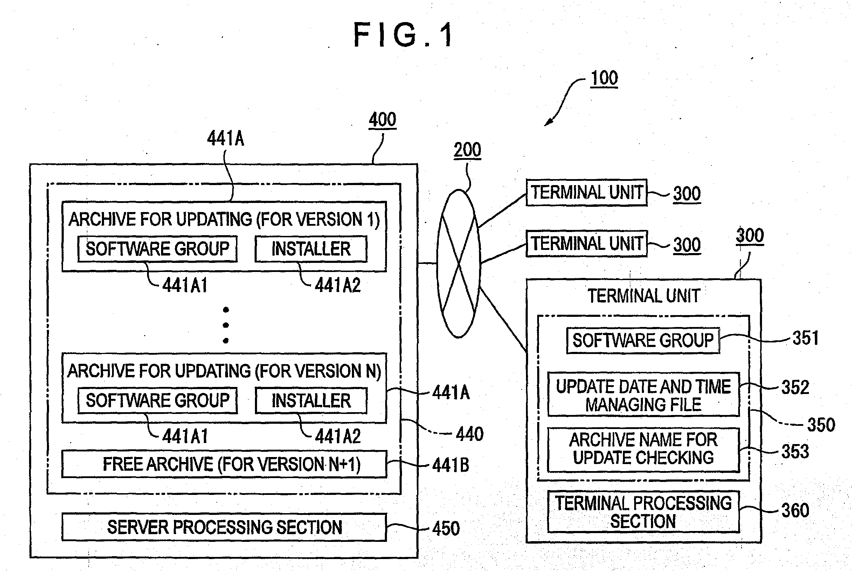

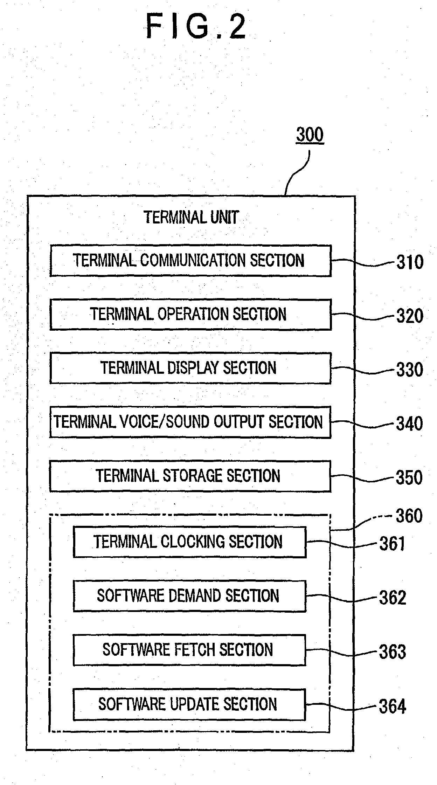

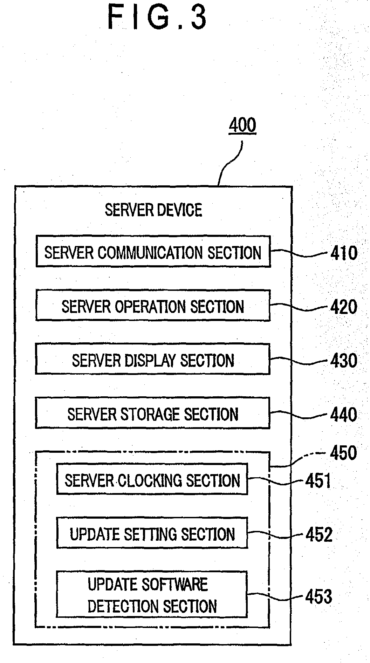

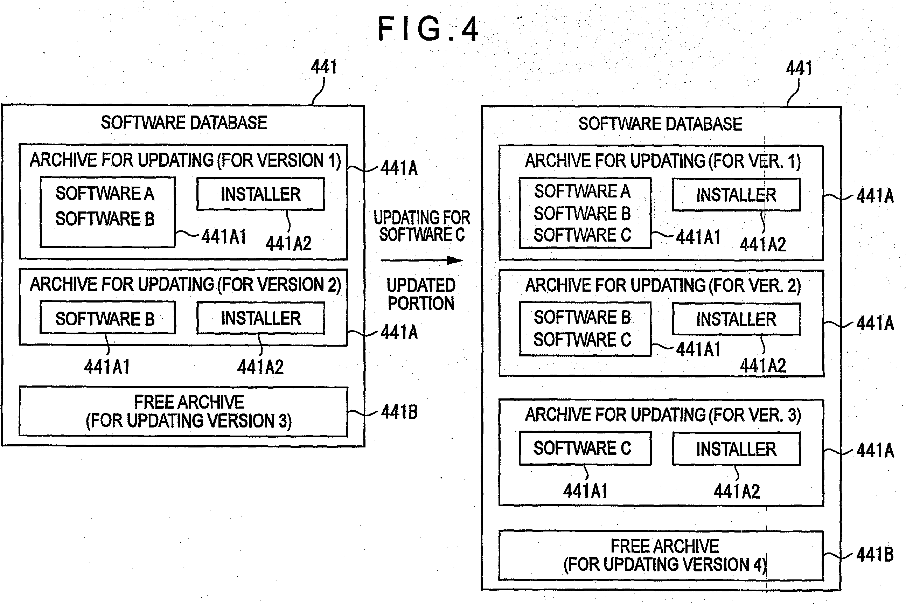

One embodiment of the software update processing system according to the present invention is described below with reference to the related drawings. Fig. 1 is a block diagram showing general configuration of the software update processing system according to the present embodiment. Fig. 2 is a block diagram showing general configuration of a terminal unit. Fig. 3 is a block diagram showing general configuration of a server device. Fig. 4 is a simulated concept view showing tabular structure of a server storage section of the server device.

### [Configuration of Software Update Processing System]

In Fig. 1, the reference numeral 100 indicates a software update processing system, and the software update processing system 100 is a system for updating software provided. The software can be, for instance, an OS (Operating System), application software developed on the OS, control programs specifically used in manufacturing devices or the like. The software update processing system 100 comprises a network 200, a terminal unit 300, and a server device 400.

Connected to the network 200 are the terminal unit 300 and the server device 400. The network 200 also connects the terminal unit 300 and the server device 400 so that information can be transacted therebetween. Examples of such networks include the Internet based on a general-purpose protocol such as TCP/IP, an intranet, a LAN (Local Area Network), networks such as communication line networks and broadcasting networks in which a plurality of base stations capable of information transaction via wireless media are configured into a network, and a wireless medium itself which serves as a medium for direct information transaction between the terminal unit 300 and the server device 400. As a wireless medium, any medium such as radio waves, light, sound waves, electromagnetic waves or the like is applicable.

Examples of the terminal unit 300 include, for instance, a cellular phone, a PHS (Personal Handyphone System), a PDA (Personal Digital Assistant), a mobile personal computer, various electrical household appliances operating with programmed control. The terminal unit 300 comprises, as shown, for instance, in Fig 2, a terminal communication section 310, a terminal operation section 320, a terminal display section 330, a terminal voice/sound output section 340, a terminal storage section 350, a terminal processing section 360 and the like.

The terminal communication section 310 is connected to the server device 400 via the network 200 and is also connected to the terminal processing section 360. In addition, the terminal communication section 310 can receive a terminal signal from the server device 400 via the network 200 to carry out a prespecified input Interface process by fetching the terminal signal and output the terminal signal as a process terminal signal to the terminal processing section 360. Further; the terminal communication section 310 can receive the input of a process terminal signal from the terminal processing section 360 to carry out a preset output Interface process by fetching the inputted process terminal signal and transmit the process terminal signal as a terminal signal to the server device 400 via the network 200.

The terminal operation section 320 has various operation buttons or operation knobs (not shown) used for input operations with, for instance, a keyboard and a mouse. The input operations performed by using these various operation buttons or operation knobs include those for setting contents of operations in the terminal unit 300. Specifically, a command for executing communication, which is demand information for fetching various information including software via the network 200, a command for setting contents of various information such as software to be fetched or conditions for fetching, an instruction command for updating software, and a command for executing software can be exemplified. Further, the terminal operation section 320 outputs, according to the necessity, a prespecified signal to the terminal processing section 360 with input operation of set items so that the set items are set therein. It is to be understood that the configuration of the terminal operation section 320 is not limited to the operation with operation buttons or operation knobs, but other configuration may be employed in which, for instance, various set items are inputted with an input operation through a touch panel provided on the terminal display section 330, an input operation through voice/sound, or the like.

The terminal display section 330 is controlled by the terminal processing section 360 and displays a signal of image data from the terminal processing section 360 on the screen. Such image data include TV image data received by a TV receiving set not shown, image data recorded in a recording medium including an external device such as an optical disc and a magnetic disc and being read with a drive, image data recorded in the terminal storage section 350. Specifically any of a liquid crystal or an organic EL (electroluminescence) panel, a PDP (Plasma Display Panel), a CRT (Cathode-Ray Tube) or the like may be used as the terminal display section 330.

The terminal voice/sound output section 340 has a voice/sound generation section such as, for instance, a speaker not shown in the figure. The terminal voice/sound output section 340 is controlled by the terminal processing section 360 and outputs various signals such as voice/sound data from the terminal processing section 360 as voices and sounds from the voice/sound generation section. The Information outputted as voices and sounds includes, for instance, the traveling direction and running conditions of a vehicle as guidance for traveling to a driver of and other passengers on the vehicle. The voice/sound generation section can output, for instance, TV voice/sound date received by a TV receiving set and voice/sound data recorded in an optical disc and a magnetic disc according to the necessity. The configuration of the terminal voice/sound output section 340 is not limited to that in which the voice/sound generation section is provided but other configuration may be employed in which voice/sound data is outputted to a voice/sound generation section provided separately.

The terminal storage section 350 stores therein various information fetched via the network 200, set items inputted and operated by the terminal operation section 320, or music data and image data according to the necessity. The terminal storage section 350 is configured with a tabular structure and various types of information such as OS (Operating System) for controlling operations of the terminal unit 300 as a whole, various programs which are software including various application software operated on the OS, and various information voice/sound data and image data can be stored in the terminal storage section 350. The terminal storage section 350 may have the configuration in which a drive and a driver for storing data in a readable manner in a recording medium such as a magnetic disc HD (Hard Disc) and an optical disc is provided, or the configuration in which data can be read out from or written in a memory.

The terminal storage section 350 has, as shown in Fig. 1, a software area 351 for storing therein a plurality of software; a management file area 352 with a tabular structure for storing therein a management file in which specific information identifying each software each having information on updating date associated with each software and relating to the updating date, for instance, information on updated file name to be described hereinafter is recorded as a set of data; and an archive file area 353 capable of storing therein a plurality of information on updated file names-such as information on archive names concerning software to be updated next.

The terminal processing section 360 controls operations of the terminal unit 300 as a whole and has various input/output ports (not shown in the figure) including, for instance, a communication port to which the terminal communication section 310 is connected; a key input port to which the terminal operation section 320 is connected; a display control port to which the terminal display section 330 is connected; a voice/sound control port to which the terminal voice/sound output section 340 is connected; and a storage port to which the terminal storage section 350 is connected. Further, the terminal processing section 360 has, as various programs for making the present software update processing system 100 function, a terminal clocking section 361, a software demand section 362, a software fetch section 363, and a software update section 364.

The terminal clocking section 361 recognizes the current time based on a reference pulse such as, for instance, an internal clock. The terminal clocking section 361 then outputs time information concerning the recognized current time according to the necessity.

The software demand section 362 starts up when, for instance, a power supply unit not shown of the terminal unit 300 is turned ON and power is inputted, or in response to a prespecified input operation performed with the terminal operation section 320, and generates and sends a software demand signal for demanding software to be updated the server device 400. The software demand signal is produced using the HTTP (Hyper Text Transfer Protocol) which is a file transfer protocol, and If-Modified-Since is added to a request head of the HTTP. The software demand section 362 then recognizes, as a demand file, the update file name associated with the software fetched at the moment by the terminal unit 300, generates a software demand signal in the HTTP form whose request head is added with information on the updating date associated with the software using If-Modified-Since, and makes the terminal communication section 310 transmit the signal to the server device 400 via the network 200.

The software demand section 362 stores therein information on the update file name to be demanded to the terminal storage section 350 and information on the updating date stored in an early stage in use of the terminal unit 300, and generates a software demand signal using the information on the update file name as well as on the updating date described above. Further, the configuration of the software demand section 362 is not limited to that in which it generates a demand signal and makes the terminal communication section 310 transmit the signal when power is applied to or a prespecified input operation is performed with the terminal operation section 320, but any other configuration may be employed in which, for instance, the signal transmission is carried out when the current time clocked by the terminal clocking section 361 reaches to a preset time, or the signal transmission is carried out at prespecified time intervals based on the current time clocked by the terminal clocking section 361.

The software fetch section 363 fetches software transmitted from the server device 400. When the software fetch section 363 fetches the software, it also fetches information on the update file name concerning a file name corresponding to the software to be updated for demanding next updating transmitted from the server device 400 together with the software, and outputs the information to the terminal storage section 350 for storing the information therein. Further, when the software fetch section 363 fetches the software, it also fetches time information outputted from the terminal clocking section 361, and outputs the information as that on the updating date associated with the fetched software together with the software and the information on the update file name to the terminal storage section 350 for storing therein.

The software update section 364 executes processing for updating the software, when it recognizes that the software to be updated transmitted from the server device 400 is fetched by the software fetch section 363, for updating the software using the fetched installer. Although details are described hereinafter, the software updating section executes, for instance, the processing for extending the software and installer paired with the archive transmitted from the server device 400 or the so-called decompression processing, and the software is installed with the extended installer. In this step of installing the software, the software update section 364 stores the updated software in a software area 351. Further, the software update section 364 executes, after installation of the software to be newly updated, the processing of fetching time information from the server device 400, or storing therein the time information transmitted from the server device 400 together with the software as information on updating date in the management file area 352 of the terminal storage section 350 together with the information on update file names. In addition, the software update section 364 makes the archive file area 353 of the terminal storage section 350 store information on update file names to be updated next transmitted from the server device 400 together with the software.

The server device 400 can transact information with the terminal unit 300 via the network 200. The server device 400 can also transact information via the network 200 with other server devices, for instance, a firm banking (FB) facility built on the Value-Added Network (VAN) administered by each financial institution, so called the financial VAN, or the like. The server device 400 comprises, as shown in Fig. 3, a server communication section 410, a server operation section 420, a server display section 430, a server storage section 440, and a server processing section 450.

The server communication section 410 is connected to the terminal unit 300 via the network 200 and is also connected to the server processing section. In addition, the server processing section 100 can receive a server signal from the terminal unit 300 via the network 200 to carry out a preset input Interface processing by fetching the server signal and output the server signal as a process server signal to the server processing section 450. Further, the server communication section 410 can receive the input process server signal from the server processing section 450 to be transmitted to the terminal unit 300 to carry out a preset output Interface process by fetching the inputted process server signal and output the process server signal as a server signal to the terminal unit 300 via the network 200. It is to be understood that the configuration I is not limited to that in which the server signal is outputted based on the information described in the process server signal only to the prespecified terminal unit 300 according the necessity, and the configuration is allowable in which the server signal is outputted to a plurality of the terminal units 300 or to all of the terminal units 300.

The server operation section 420, as with the terminal operation section 320, has various operation buttons or operation knobs (not shown in the figure) for input operations with, for instance, a keyboard and a mouse. The input operations performed with these various operation buttons or operation knobs include those for setting input such as that for setting of contents of an operation of the server device 400, for setting of information to be stored in the server storage section 440, and for updating information stored in the server storage section 440. Further, the server operation section 420 outputs, according to the necessity, a signal corresponding to the set item to the server processing section 450 in response to the set item input operation so that the item is set therein. It is to be understood that, as with the terminal operation section 320, the configuration of the server operation section 420 is not limited to the operation with operation buttons or operation knobs, and that other configuration may be employed, for instance, in which various set items are inputted by, for instance, operating a touch panel provided on the server display section 430, or inputting voices and sounds.

The server display section 430 is, as with the terminal display section 330, controlled by the server processing section 450 and displays a signal of image data from the server section 450 on the screen. Such image data include image data from the server storage section 440 and image data fetched from each server.

The server storage section 440 stores various information received from the terminal unit 300 or the like and inputted software in the readable state. Specifically, the server storage section 440 has a storage medium (not shown) for storing therein information data, and a drive or a driver as a reading medium for storing information data in a readable form from the storing medium described above. As information data to be stored, for instance, information inputted with an input operation of the server operation section 420 can also be stored and contents of the information stored with the input operation can be updated according to the necessity. Further, the server storage section 440 stores therein various programs developed on the OS (Operating System) for controlling operations of the server device 400 as a whole and the navigation system as a whole.

Software as information herein is stored, as shown in Figs. 1 and 4, in the server storage section 440 with a structure of data to be stored in the software management database 441. Namely, the server storage section 440 comprises the software management database 441. The software management database 441 has an update data area 441A for each version, which is update history information. The update data area 441A has a software area 441A1 for storing therein software and an installer area 441A2 for storing therein an installer having a script file or the like which is software used for recording and setting to install each software with the terminal unit 300. Namely, the update data area 441A is configured with a data structure in which software and installer to be stored is stored as one record in one folder and recorded for each version thereof in the integrated state. The update data area 441A further has information on update file name of the update data area 441A and information on the time when the update data area 441A is provided.

In the software area 441A1, as shown in Fig. 4, each time the software B, C having functions to be updated is added, the software B, C is integrally stored as one record together with the previous older version(s). In Fig. 4, the configuration is shown in which the software A is an original version, and is updated once to be turned into a version 2 with functions of software B added thereto, and is again updated to be turned into a version 3 added with functions of software C added thereto, but the configuration is not limited to this one.

The software management database 441 is further provided with a free folder for storing therein software to be updated next, namely, a free area 441B with any software not yet recorded therein and having only information concerning an update file name of the software to be updated next demanded by the terminal unit 300 for updating.

The server storage section 440 further stores therein personal information which is information concerning users utilizing the terminal unit 300. The personal information includes full names, addresses, ID numbers of the users and passwords designated to each user, as well as features such as performance of the terminal unit 300, address numbers for transacting information with the terminal unit 300, terminal specific information specific for the terminal unit 300, or the like. The server storage section 440 is also provided with an area for storing therein message information and guidance information such as, for instance, ''No software to be updated", "The version is the latest", or the like.

The server processing section 450 utilizes various programs stored in the server storage section 440, and comprises a server clocking section 451 a update setting section 452, and a update software detection section 453 or the like. The server processing section 450 executes, when connected, for instance, to the firm banking to transact various information, the processing for settlement, and the processing for alerting the administrator of the necessity that the settlement processing should quickly be done with a display of a message for the same.

The server clocking section 451, as with the terminal clocking section 361, recognizes the current time based on a reference pulse such as, for instance, an internal clock. The terminal clocking section 361 then outputs date and time information concerning the recognized current time, if required.

When the update setting section 452 recognized, for instance, that software to be newly updated is set and inputted according to an input operation in the server operation section 420, it makes the server storage section 440 record therein the software to be updated. Specifically, as shown, for instance, in Fig. 4, the updated software is stored in a software area 441A1 of each version in the software management database 441, while the installer for installing the updated software is stored in an installer area 441A2 of each version. The update setting section 452 further comprises a software area 441A1 for storing the software updated in a free area 441 B and stores the software therein, and also comprises an installer area 441A2 for storing the installer to create a new update data area 441A in which the free area 441B represents one record for each version. In addition, the update setting section 452 comprises a new free area 441B in the software management database 441. The update setting section 452 then associates the information on update file names containing the updated software as one record and information on update file names of the new free area 441B with the time information outputted from the server communication section 410 and stores the associated information therein.

The update software detection section 453 detects software to be updated from the software management database 441 in the server storage section 440 based on a software demand signal transmitted from the terminal unit 300, and makes the processing for delivering the detected software, prespecified message information or the like to the terminal unit 300. Specifically, the update software detection section 453 compares the information on updating date of the software demand signal to the time information associated with the information of the update file name of the software management database 441. The update software detection section 453 then detects time the information having more recent date than the updating date, and makes necessary processing for transmitting the software stored as one record corresponding to the information on update file names of the detected time information and installer thereof, as software to be updated the terminal unit 300 via the network 200 by the server communication section 410. The terminal unit 300 to which the software is transmitted recognizes the transmission in response to the software demand signal or based on the terminal-specific information for the terminal unit 300 contained in the software demand signal, and allows transmission of the software to be updated based on the address number of the terminal unit 300 or the like.

When the software is transmitted, the update software detection section 453 also transmits the update file name to be demanded next by the terminal unit 300, namely, the update file name of the free area 441B. The update software detection section 453 further makes the necessary processing for transmitting date and time information outputted from the server clocking section 451 based on a software demand signal from the terminal unit 300 or other demand signals.

### [Operations of the Software Update Processing System]

Operations of the software update processing system 100 described above are described in detail below with reference to the related drawings.

### (Operations of updating software in the server device)

Operations for newly updating software in the server device 400 are now described below. In this embodiment, the second update operation is described with reference to Fig. 4 in which the software once updated is to be newly updated once again to be turned into a version 3, but the configuration is not limited to this one.

Firstly, an administrator of the server device 400 executes prespecified input operations in the server operation section 420. With the input operations, the update setting section 452 of the server device 400 recognizes the prespecified input operations to fetch new software C to be updated and an installer for installing the software C. For instance, the update setting section 452 fetches the software C and installer by making a reading medium such as a drive and a driver (not shown) provided in the server device 400 directly read the software C and installer from a recording medium with the same recorded therein, or directly fetches the same via LAN or the like. The update setting section 452 then outputs the fetched software C and installer to the server storage section 440 for updating. Namely, the update setting section 452 stores the fetched software C sin the software area 441A1 in the update data area 441A of each version of the software management database 441 of the server storage section 440, and also stores the fetched installer in the installer area 441A2 in the update data area 441A of each version respectively.

The update setting section 452 comprises the software area 441A1 and the installer area 441A2 in the empty area 441B of the software management database 441, and stores updated software C in the software area 441A1 and the installer in the installer area 441A2 respectively to create the update data area 441A for recording therein the new version of software. The update setting section 452 further provides the software management database 441 with the free area 441B having information on the update file name for the version 4 capable of storing therein the software to be updated next. The update setting section 452 then associates the information on the update file name of the newly provided free area 441B with the time information outputted from the server communication section 410 and stores the associated information as time information concerning the date and time when the software C is updated, and with this operation, the operation for updating new software in the server device 400 ends.

As shown in this Fig. 4, each time software is updated, in the software management database 441 in the server device 400, a number of records of the paired software and installer stored in a folder form for each version increases, and also the number of software stored in the software area 441A for each version increases.

### (Operations of updating software in the terminal unit)

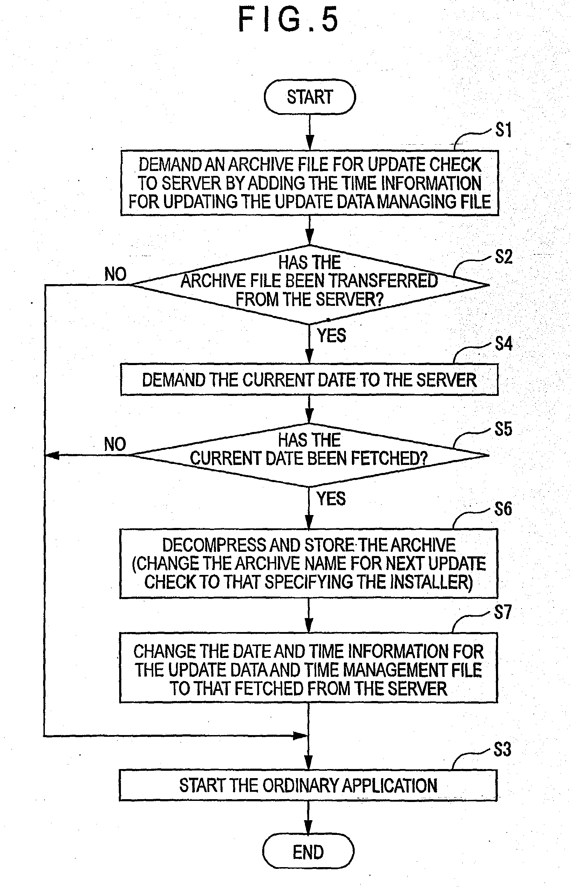

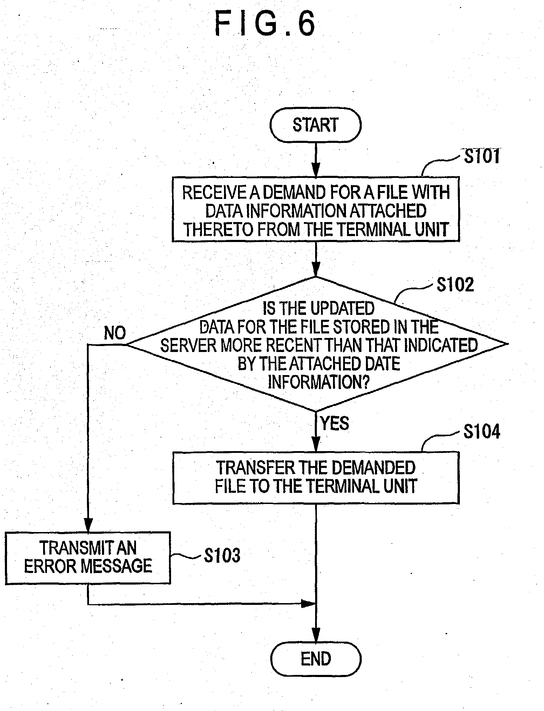

Operations for updating software in the terminal unit 300 are described next with reference to the related drawings. Fig. 5 is a flow chart showing the operations for updating software executed in the terminal unit. Fig. 6 is a flow chart showing the operations for updating software in the server device in response to an update demand from the terminal unit.

Firstly, a user turns ON the power supply unit in the terminal unit 300 to supply power. When the power is supplied, the terminal processing section 360 makes the terminal processing section 360 operate. As shown in Fig. 5, the terminal processing section 360 fetches the update file name stored in the terminal storage section 350 as a demand file name, generates a software demand signal in the HTTP form with the information on the updating date stored in the terminal storage section 350 added to the request head using the If-Modified-Since, makes the terminal communication section 310 transmit the signal to the server device 400 via the network 200 (Step S1), and enters the standby state to wait for information transmitted from the server device 400.

With the transmission of the software demand signal from the terminal unit 300 in this Step S1, as shown in Fig. 6, the server device 400 receives the software demand signal having information on update file names and on updating date with the server communication section 410 (Step S101). The server device 400 then searches the update data area 441A having more recent updating date among time information in each update data area 441A in the software management database 441 with the update software detection section 453 based on the updating data information included in the software demand signal transmitted from the terminal unit ((Step S102). Namely, for instance, when the software in the terminal unit 300 has already been updated to the software B, if the software C is updated, it means that the update data area 441A exists, and, if not, it means that the free area 441B remains as it is without being updated with the software C and that the software B of the version 2 is the latest one.

In Step S102, when the update software detection section 453 determines that the update data area 441A can not be detected, as described above, it determines that the software has not been updated to a version more recent than that of the software C stored in the terminal unit 300. With this determination, the update software detection section 453 reads out the message information stored in the server storage section 440, such as "No software to be updated", "The version is the latest", or the like, and makes the necessary processing for transmitting the message to the terminal unit 3 00 via the network 200 with the server communication section 410 (Step 103), and with this operation the operation for updating software in the server device 400 ends.

On the other hand, in Step S102, when the update software detection section 453 determines that the update data area 441A can be detected, as described above, it determines that the software has been updated to the software C more recent than the software B stored in the terminal unit 300. With this determination, the update software detection section 453 makes the necessary processing for making the server communication section 410 transmit the software C and installer stored in the update data area 441A and detected by the software management database 441 to the terminal unit 300 via the network 200 (Step S104), and with this operation the operation for updating software in the server device 400 ends.

When the terminal unit 300 in the standby state after the processing in Step S1 recognizes that information has been transmitted thereto from the server device 400 by terminal communication section 310 and fetches the information, it determines whether or not the information transmitted from the server device 400 is fetched by the software fetching section 363 as the software C to which the software is be updated to (Step S2). When the terminal unit 300 determines that the software fetching section 363 has not fetched the software C to which the software is to be updated, it determines that the transmitted information is not software, and starts up the ordinary application software or the like (Step S3), and with this operation the operation for updating software in the terminal unit 300 ends. In the Step S3, for instance, the previous software B may be utilized to process data various information according to the necessity, and, when the server device 400 receives message information in Step S103, the message information is subjected, for instance, to the processing for display thereof on the terminal display section 330.

In Step S2, when the terminal unit 300 determines that the software fetching section 363 has fetched the software C to which the software is to be updated, the software update section 364 makes the necessary processing for fetching time information from the server device 400 (Step S4). Namely, the software update section 364 makes the necessary processing for transmitting a demand signal indicating that time information is to be transmitted to the server device 400, and fetches the time information from the server device 400. After a prespecified period of time passes in the standby state for fetching the time information (Step S5), if the time information can not be fetched, the software update section 364 determines that the processing for updating has failed in this processing operation due to, for instance, a communication error, and proceeds to Step 3, and with this operation, the operation for update processing ends.

In Step S4, when it is determined that the time information has be fetched from the server device 400, the software update section 364 decompresses the software and installer paired with each other in the archive state, installs the software C using the extended installer, and then stores the software C in the software area 351. The software update section 364 further stores information on the update file name to be updated next transmitted along with the software C in the archive file area 353 of the terminal storage section 350 (Step S6).

The software update section 364 then makes the necessary processing for storing the fetched time information as that on updating date together with the information on update file names of the software C in the management file area 352 of the terminal storage section 350 (Step S7), and proceeds to Step 3. With this operation, the operation for update processing ends.

As described above, in the embodiment above-mentioned, when the server communication section 410 of the server device 400 fetches an update demand signal demanding the software to be updated from the terminal unit 300 via the network 200, the update software detection section 453 of the server device 400 compares the information with the time information concerning time and date storing the software and stored together with the software in the server storage section 440 based on the updating date information for the update file information included in the update demand signal fetched from the terminal unit 300 and identifying the software name to be updated, detects the time information having more recent time and date, recognizes information on update file names stored in the server storage section 440 corresponding to the time information described above, and transmits data of the software in the update data area 441A of this information on update file names as the software to be updated the terminal unit 300 via the network 200.

With this feature, even if the software installed in a plurality of the terminal units 300 is updated to have different versions respectively, based on the information on an updating date updated in each terminal unit 300, by demanding the file name information to be updated next fetched from the server device 400 in the previous update processing, time of communications or updating software performed between the server device 400 and the terminal unit 300 can be reduced, so that the processing for updating the software to be updated in the terminal unit 300 can be simplified. Especially, in the configuration with the relatively lower data processing capacity like in electrical household appliance operating under control by the program, desired or higher-performance operations can be added a new by updating the software as a program according to the necessity.

When the update software detection section 453 of the server device 400 transmits the software to be updated to the terminal unit 300, the update software detection section 453 also transmits the time information clocked in the server clocking section 451 based on a demand from the terminal unit 300, and makes the terminal unit 300 fetch the information as the information on updating date. Because of this feature, for instance, the updated date and time in a plurality of the terminal units 300 can be monolithically controlled with time information clocked by the server device 400, which enables the terminal unit 300 to fetch the correct software to be updated without fail.

In addition, in the present system, the data structure is provided in which, each time software is updated in the server storage section, the software is stored together with the information on the update file name and the date and time when the software in the update data area 441A1, and also the free area 441B having therein information on update file name for storing the software to be updated next time by the update setting section 452 is provided in the server storage section 440. Because of this feature, the update file name information is previously set as a update demand signal for demanding the software to be updated next in the terminal unit 300, so that the processing for updating software can easily be performed with less times of communications.

The update setting section 452 further stores the software to be updated anew in the free area 441B, asscciates the data and time when the software is stored with the update file name information in the free area to store the associated information in the update data area 441A, and further creates the free area 441B in the server storage section 440. Because this feature, even if the software installed in a plurality of the terminal units 300 is updated separately to have different versions, the server device 400 can transmit suitable software to be updated next to each terminal units 300, which enables the processing for updating software with smaller timers of communications.

When the update setting section 452 has the software to be updated anew stored, it has the software stored not only in the free area 441B and also in the software area 441A1 in each update data area 441A. Because of this feature, even if the software installed in a plurality of the terminal units 300 is updated discretely to have a different version respectively, the server device 400 can transmit suitable software to be updated next in each terminal unit 300, which makes it possible for each terminal unit 300 to easily acquire software suited thereto.

In addition, the present system has the configuration in which If-Modified-Since of the HTTP widely employed for various purposes is used as an update demand signal for demanding the software to be updated from the terminal unit 300, and also in which the information on the update file name concerning the software to be transmitted from the server device 400 for next updating is attached in advance to the demand. Because of this feature, the configuration is easily available in which the terminal unit 300 easily fetches the software to be updated even with smaller times of communications.

As for the software to be updated, the present system employs the data structure in which the software to be updated is stored in a pair with the installer for installing the software for each version in the update data area 441A, so that it is required only to send an update demand signal to the server device 400 as a file, demanding information on the update file name in the update data area 441A for each version, which makes it possible for the terminal unit 300 to appropriately fetch software and installer more easily with the workload for communication further reduced.

### [Variants of the Embodiments]

The present invention is not limited to the embodiments described above, but includes the variants shown below within the scope in which the object of the present invention can be achieved.

Description above assumes the data structure in which software and installer are paired to be stored in the update data area 441A, but other structure may be used in which the software and installer is not paired and an update demand signal is generated based on the specific information such as a file name of the software so that the software is directly transmitted. Description above assumes the archive state in which software and installer are stored in the update data area 441A, but the configuration is not limited to storage in the compressed state, and the software and installer may be installed as they are for transaction. It is to be noted that, when the software is transacted in the archive state, communication workload can be further reduced.

Description above assumes the configuration in which, when software to be updated is detected, the software is transmitted to the terminal unit 300, but other configuration may be employed, for instance, in which the terminal unit 300 is informed of the presence of software to be updated anew and the user of the terminal unit 300 carries out a prespecified setting input to make the necessary processing for updating. Namely, in the configuration, for instance, the update file names or the like in the update data area 441A for storing the software available for updating detected based on an update demand signal from the terminal unit 300 are transmitted to the terminal display section 330 of the terminal unit 300 with a data structure so that the update file names can be displayed in a tabular form, and the user of the terminal unit 300 then selects the update file names or the like displayed in a tabular form with a prespecified input operation for setting in the terminal operation section 320 to make the necessary processing for updating so that contents of the setting input are transmitted to the server device 400 for transmission of the corresponding software. With this feature, it is possible to update only the software determined as necessary by the user, which provides the further improved convenience and reduced workload of processing as well as for communications. When there is a plurality of software to be used, the configuration may be employed in which not only a single piece but also a plurality of software are selected to be updated simultaneously. Another configuration may be employed in which presence of software available for updating is informed in a tabular form and a user selects the software to be updated discretely.

Description above assumes the configuration in which information on updating date is stored upon fetching time information from the server device 400 by fetching the software to be updated by the terminal unit 300 when the time information is fetched from the server device 400, but the configuration is allowable in which, if the terminal clocking section 361 of the terminal unit 300 can clock time and date accurately, the time information clocked by the terminal clocking section 361 is used as the information on updating date. With this configuration, the number of communications can further be further reduced. To obtain coordinated clocking of time and date for the terminal unit 300, for instance, the configuration may be employed in which time is synchronized at regular intervals by acquiring time information clocked in the server clocking section 451 in the server device 400, or the terminal clocking section 361 having a function as a radio wave self-corrective clock matches the time thereof with the standard time according to the necessity.

Another configuration may be used in which, when software is transmitted from the server device 400, the time information is transmitted together. With this feature, only the processing for transmitting an update demand signal from the terminal unit 300 followed by transmission of software or message information from the server device 400 is required to complete the operation for updating the software, namely, communication is required only once to complete the processing for updating, which allows reduction of times of required communications to the minimum level.

Description above assumes the configuration in which, when the power supply unit of the terminal unit 300 is turned ON, an update demand signal is generated and transmitted to execute the processing for updating, but other configuration may be employed in which, for instance, the processing for updating is executed at a prespecified time and date based on time information clocked by the terminal clocking section 361, or the operation for updated is carried out in response to a prespecified input operation with the terminal operation section 320 in the terminal unit 300.

Description above assumes the configuration in which If-Modified-Since of the HTTP is employed as an update demand signal, but the configuration is not limited to this one, and any other protocol type may be employed.

Description above assumes the configuration in which data stored in the server storage section 440 and the terminal storage section 350 is based on the tabular structure, but the configuration is not limited to the data structure in the tabular form, and any other tabular structure may be employed.

The specific structures and procedures for carrying out the present invention may be changed into other ones according to the necessity within the scope in which the object of the present invention can be achieved.

### [Effect of the Embodiments]

As described above, in the embodiments of the present invention described above, when the update software detection section 453 fetches an update demand signal for demanding software to be updated via the network 200, the update software detection section 453 compares, based on information on updating date of the information on update file names included in the update demand signal and identifying the software to be updated, the update demand signal to the time information concerning time and date of storing the software stored in the server storage section 440 together with the software, detects time information having more recent date than the updating date, recognizes the update file names stored in the server storage section 440 corresponding to the information on this time information, and makes necessary processing for transmitting the software in the update data area 441 A of this information on update file names as the software to be updated via the network 200. With this feature, even if the software installed in a plurality of the terminal units 300 is updated discretely to have a different version respectively, by demanding an update file name information to be demanded next fetched in advance from the server device 400 in the previous updating step based on the information on updating date updated in each terminal unit 300, the times of communication for updating between the server device 400 and the terminal unit 300 can further be reduced, which simplifies the processing for fetching and updating the software to which the current version of software is to be updated in the terminal unit 300.

## Claims

1. A software update processor for transmitting software to be updated via a network, comprising:
a storage section for storing therein said software together with specific information identifying said software and time information concerning the time and date when the software is stored;
a demand acquirement section for acquiring a demand signal for demanding said software to be updated via said network; and
a detection section for determining whether or not the information on updating date included in the specific information identifying the software to be updated included in said demand signal is more recent than the time information included in the specific information stored in said storage section, and also for detecting and transmitting said software corresponding to the specific information indicating more recent data of the time information as said software to be updated.

2. A software update processor for transmitting software to be updated via a network, comprising:
a storage section for storing therein said software together with specific information identifying said software and time information concerning the time and date when the software is stored;
a demand acquirement section for acquiring a demand signal for demanding said software to be updated via said network; and
a detection section for determining whether or not the information on updating date including in the specific information identifying the software to be updated included in said demand signal is more recent than the time information included in the specific information stored in said storage section, and for transmitting, when the specific information indicates more recent time information, the detected specific information so that the information can be displayed in a tabular form.

3. The software update processor according to Claim 2, wherein said detection section can select specific information for transmission so that the information can be displayed in a tabular form and executes the processing for transmitting the software corresponding to the specific information.

4. The software update processor according to any of Claims 1 to 3 further comprising:
a clock section for clocking time; wherein said detection section detects and transmits said software to be updated, and also transmits the time information concerning the clocked date and time.

5. The software update processor according to any of Claims 1 to 4, wherein said demand signal acquired by said demand acquirement section is created using the HTTP (Hyper Text Transfer Protocol) as a file transfer protocol, and If-Modified-Since is added to a request head of said HTTP.

6. The software update processor according to any of Claims 1 to 5, wherein said storage section is configured in a data structure in which the software to be updated is stored for each version thereof together with said specific information and said date and time information, said software update processor further comprising:
an update setting section for providing, when said software to be updated is stored in said storage section, a free area having specific information as an area for storing therein the software to be updated next.

7. The software update processor according to Claim 6, wherein said update setting section stores the software to be updated in said free area, also stores the time information concerning the stored time and date in association with the specific information in said free area, and provides a new free area in said storage section.

8. A software update processor for receiving software to be updated via a network, comprising:
a storage section for storing therein said software;
a software demand section for generating a demand signal having time information concerning time and date when the software is updated as well as specific information identifying the software to be updated next and demanding the software to be updated next, and for transmitting the demand signal; and
a software update section for executing the processing for updating by fetching said software to be updated transmitted by the transmission of said demand signal and by making said storage section store therein the software to be updated in operable state.

9. A software update processor for receiving software to be updated via a network, comprising:
a storage section for storing therein said software;
a software demand section for generating a demand signal having time information concerning time and date when the software is updated as well as specific information identifying the software to be updated next and demanding the software to be updated next, and for transmitting the demand signal; and
a software update section for fetching specific information on said software to be updated transmitted by the transmission of said demand signal so that the information can be displayed in a tabular form.

10. The software update processor according to Claim 9 further comprising:
a display section for displaying said specific information in a tabular form; and
an input section for selecting at least one piece of the specific information displayed on the display section, wherein said software update section demands for transmission of software concerning the specific information selected by said input section.

11. The software update processor according to any of Claims 8 to 10, wherein said software demand section utilizes time information transmitted together with the transmitted software to be updated as time information concerning the updated date and time of a demand signal.

12. The software update processor according to any of Claims 8 to 11, wherein said software demand section utilizes the specific information transmitted together with the transmitted software to be updated as specific information identifying the software to be updated next.

13. The software update processor according to any of Claims 8 to 12, wherein said software demand section utilizes the HTTP (Hyper Text Transfer Protocol) as a file transfer protocol, and generates said demand signal added with If-Modified-Since to a request head of said HTTP.

14. The software update processor according to any of Claims 8 to 13, wherein said software demand section transmits said demand signal when the processor starts up.

15. A software update processing system comprising,
the software update processor according to any of Claims 8 to 14; and
the software update processor according to any of Claims 1 to 7 for detecting said software to be updated via said network in a transmittable state, based on a demand signal via said network from the software update processor according to any of Claims 8 to 14.

16. A software update processing system for making a terminal unit fetch software to be updated via a network from a server device and having the software updated according to the necessity, wherein said server device comprises:
a server storage section for storing therein said software together with specific information identifying the software as well as time information concerning the time and date when the software is stored;
a demand acquirement section for acquiring a demand signal demanding said software to be updated transmitted from said terminal unit via said network; and
a detection section for determining whether or not updating date information included in the specific information identifying the software to be updated included in said demand signal is more recent than the time information included in the specific information stored in said server storage section, detecting said software corresponding to the specific information in the more recent time information as said software to be updated, and making the detected software transmitted to said terminal unit.

17. The software update processing system for having a terminal unit fetch software to be updated from a server device via a network and making the software updated according to the necessity, wherein said server device comprises:
a server storage section for storing therein said software together with specific information identifying said software as well as time information concerning the date and time when the software is stored;
a demand acquirement section for acquiring a demand signal demanding software to be updated transmitted from said terminal unit via said network; and
a detection section for determining whether or not updating date information included in the specific information identifying the software to be updated included in said demand signal is more recent than the time information included in the specific information stored in said server storage section, and transmitting, when specific information with the more recent time information is detected, the detected specific information so that the specific information can be displayed in a tabular form on said terminal unit.

18. The software update processing system for making a terminal unit fetch software to be updated from a server device via a network and having the software updated according to the necessity, wherein said terminal unit comprises:
a terminal storage section for storing therein said software;
a software demand section for generating a demand signal having time information concerning the time and date when software is updated as well as specific information identifying the software to be updated next and demanding the software to be updated next, and making said demand signal transmitted via said network to the server device; and
a software update section for updating software by fetching said software to be updated transmitted from said server device by the transmission of said demand signal, and by storing the software in said terminal storage section in operable state.

19. The software update processing system for making a terminal unit fetch software to be updated from a server device via a network and having the software updated according to the necessity, wherein said terminal unit comprises:
a terminal storage device for storing therein said software;
a software demand section for generating a demand signal having time information concerning the time and date when software is updated as well as specific information identifying the software to be updated next and demanding said software to be updated next, and making said demand signal transmitted via said network to the server device; and
a software update section for fetching specific information on said software to be updated transmitted from said server device by the transmission of said demand signal so that the specific information can be displayed in a tabular form.

20. A method of software update processing for transmitting software to be updated via a network by a computing section, wherein said computing section determines, when a demand signal for demanding said software to be updated via said network is acquired, based on the updating date information included in the specific information identifying the software to be updated included in the demand signal, whether or not the time information concerning the time and date when the software is stored, which is stored in the storage section together with said software, is more recent; detects the specific information identifying said software stored in said storage section together with said time information corresponding to said more recent time information; and has said software corresponding to the specific information transmitted as said software to be updated.

21. A method of software update processing for transmitting software to be updated via a network by a computing section, wherein said computing section determines, when a demand signal demanding the software to be updated via said network is acquired, based on the updating date information included in the specific information identifying the software to be updated included in the demand signal, whether or not the time information concerning the time and date when the software is stored, which is stored in the storage section together with said software, is more recent; detects the specific information identifying said software stored in said storage section storage section together with said time information corresponding to the more recent time information; and has the specific information transmitted so that the specific information can be displayed in a tabular form.

22. A method of software update processing for receiving software to be updated via a network by a computing section, comprising the steps of:
generating a demand signal which has time information concerning the time and date when software is updated as well as specific information identifying software to be updated next and demands the software to be updated next, and making the generated demand signal transmitted; and
fetching said software to be updated transmitted by the transmission of the demand signal to update the software in operable state.

23. A method of software update processing for receiving software to be updated via a network by a computing section comprising the steps of:
generating a demand signal which has time information concerning the time and date when software is updated as well as specific information identifying software to be updated next and demands the software to be updated next, and making the generated demand signal transmitted; and
fetching the specific information on said software to be updated transmitted by the transmission of the demand signal so that the specific information can be displayed in a tabular form.

24. A method of software update processing for making a terminal unit fetch software to be updated from a server device via a network by a computing section and having the software updated according to the necessity, wherein said computing section makes said server device acquire a demand signal demanding said software to be updated from said terminal unit via said network; determines, based on the updating date information included in the specific information identifying software to be updated included in said demand signal with said server device, whether or not the time information concerning the time and date when the software is stored, which is stored in the storage section of said server device together with said software, is more recent, detects specific information identifying said software corresponding to the more recent time information and stored together with said time information in said storage section; transmits said software corresponding to the specific information and stored in said storage section as said software to be updated said terminal unit; and makes said terminal unit update said fetched software to be updated in operable state.

25. A method of software update processing for making a terminal unit fetch software to be updated from a server device via a network by a computing section and making the software updated according to the necessity, wherein said computing section makes said server device acquire a demand signal demanding said software to be updated from said terminal unit via said network; determines, based on the updating date information included in the specific information identifying software to be updated included in said demand signal with said server device, whether or not the time information concerning the time and date when the software is stored, which is stored in the storage section of said server device together with said software, is more recent, detects specific information identifying said software corresponding to the more recent time information and stored together with said time information in the storage section; transmits the specific information to said terminal unit so that the specific information can be displayed in a tabular form; and selects at least one piece of the specific information on said terminal unit and displays the specific information in a tabular form so that said server device can demand the information.

26. A software update processing program for making the computing section execute the method of software update processing according to any of Claims 20 to 25.

27. A recording medium with a software update processing program recorded therein, wherein said software update processing program according to Claim 26 is recorded in the state readable for the computing section.
